# EUROPÄISCHE PATENTSCHRIFT

(11) **EP 2 628 587 B1**
(45) Veröffentlichungstag und Bekanntmachung des Hinweises auf die Patenterteilung: **19.06.2019**
(21) Anmeldenummer: 13151694.0
(22) Anmeldetag: 17.01.2013
(51) Int. Cl.: B29C 70/46, B29C 70/54, B29C 33/44

(54) **Formwerkzeug**
Moulding tool
Outil de formage

(30) Priorität: 17.02.2012 DE 102012202475
(43) Veröffentlichungstag der Anmeldung: 21.08.2013
(73) Patentinhaber: Bayerische Motoren Werke Aktiengesellschaft, 80809 München (DE)
(72) Erfinder: Steiger, Edmund, 94428 Eichendorf (DE); Stuckenberger, Robert, 94419 Reisbach / Haberskirchen (DE); Forster, Matthias, 84169 Altfraunhofen (DE); Theinert, Joerg, 84051 Ohu (DE)

(56) Entgegenhaltungen:
- FR-A1- 2 840 845
- GB-A- 859 406
- JP-A- 2000 061 954
- US-A- 3 587 134
- US-A- 4 555 086

## Beschreibung

Die Erfindung bezieht sich auf ein Formwerkzeug für Faserverbundbauteile, mit relativ zueinander hubbeweglich betätigten, mit einander zugekehrten Formflächen zur Begrenzung der Formkavität in der Werkzeugschließlage versehenen, ersten und zweiten Werkzeugteilen, von denen zumindest das erste Werkzeugteil mindestens einen Auswerfer enthält, welcher von einer mit der Formfläche des Werkzeugteils flächenkonformen Einfahrposition in der Werkzeugschließlage unter der Federkraft einer zwischen erstem Werkzeugteil und Auswerfer wirksamen Auswerferfeder beim Öffnen der Werkzeugteile in eine über die Formfläche vorstehende Ausfahrposition verstellbar ist, nach dem Oberbegriff des Patentanspruchs 1.

Bei den aus der US 4 555 086 A bekannten Formwerkzeugen dieser Art zur Herstellung von Faserverbundbauteilen ist der Auswerfer kontinuierlich in Richtung der Ausfahrposition federnd vorgespannt und wird im letzten Teil des Werkzeugschließhubs mittels hubabhängig betätigter Schubstangen entgegen der Vorspannkraft der Auswerferfedern zwangsweise mehr und mehr zurückgefahren, bis er am Schließhubende die volle Einfahrposition erreicht. Dabei besteht jedoch das Problem, dass der Auswerfer auf Grund einer vorzeitigen örtlichen Faserlagenkompression Druckspuren oder eine Faltenbildung im fertiggestellten Faserverbundbauteil hinterlässt, während an Formwerkzeugen für Kunststoff- oder metallische Spritzgussteile, bei denen die Formkavität erst in der Werkzeugschließlage mit der Formmasse befüllt wird, ein derartiger Auswerfer ohne eine solche mechanische oder fremdkraft- z.B. hydraulisch betätigte Zwangssteuerung beim Befüllvorgang die über die umgebende Formfläche vorstehende Ausfahrposition beibehalten und dadurch die Formkavität mit entsprechenden Auswirkungen auf die Bauteilproduktion blockieren würde.

Aufgabe der Erfindung ist es, ein Formwerkzeug der eingangs genannten Art so auszubilden, dass der Bau- und Steuerungsaufwand für einen funktionsgerechten Auswerfermechanismus in erheblichem Umfang reduziert wird.

Diese Aufgabe wird erfindungsgemäß durch das im Patentanspruch 1 gekennzeichnete Formwerkzeug gelöst.

Bei dem erfindungsgemäßen Formwerkzeug wird die Auswerfersteuerung unter Fortfall eines fremdkraftbetätigten, baulich und steuerungsmäßig aufwändigen Auswerferantriebs von einem einfachen, rein passiv arbeitenden Federmechanismus übernommen, welcher den Auswerfer entgegen der Auswerferfeder selbsttätig hubabhängig in die flächenkonforme Einfahrposition umsteuert, bevor das Werkzeug den letzten Teil des Schließhubs erreicht, um so bei Faserverbund-Formwerkzeugen eine vorzeitige oder übermäßige Faserlagenkompression und daraus resultierende Faltenbildung im Bereich des Auswerfers zu unterbinden und bei Formwerkzeugen mit einer erst in der Werkzeugschließlage befüllten Formkavität sicherzustellen, dass ein Auswerfer, welcher, wie bevorzugt, allseitig von der werkzeugseitigen Formfläche umschlossen wird, beim Befüllvorgang nicht in die Formfläche vorsteht und dadurch eine formgenaue Bauteilfertigung verhindert.

Nach einer alternativen, ebenfalls bevorzugten Ausführungsform der Erfindung ist der Auswerfer randseitig im Abfallbereich eines erfindungsgemäßen Faserverbund-Formwerkzeugs angeordnet, was den Vorteil hat, dass sich der Abfallbereich sehr schmal bemessen und dadurch wertvolles Faserverbundmaterial einsparen lässt, ohne dass im Abfallbereich am Auswerfer eine Faserdesorientierung entsteht, die sich in das angrenzende Fasermaterial des Faserverbundteils fortpflanzt.

Um bei einer Vakuum- und/oder Druckinjektion der Harz- bzw. Formmasse in die Formkavität eine Leckage längs des Auswerfers zu verhindern, ist dieser am ersten Werkzeugteil vorzugsweise dichtend angeordnet, und eine baulich besonders günstige Gestaltung der Auswerfersteuerung wird dadurch erreicht, dass die Rückstellfeder einerseits fest mit dem zweiten Werkzeugteil verbunden ist und andrerseits eine im letzten Teil des Werkzeugschließhubs wirksame, im Übrigen aber getrennte Anschlagverbindung zum Auswerfer aufweist. Im Hinblick auf eine problemlos veränderlich einstellbare Federcharakteristik bei zugleich dauerhaft störungsfreier Arbeitsweise empfiehlt es sich, dass als Rückstellfeder, vorzugsweise aber auch als Auswerferfeder, jeweils mindestens eine Gasfeder vorgesehen ist.

Die Erfindung wird nunmehr anhand zweier Ausführungsbeispiele in Verbindung mit den Zeichnungen näher erläutert. Es zeigen in stark schematisierter Darstellung:

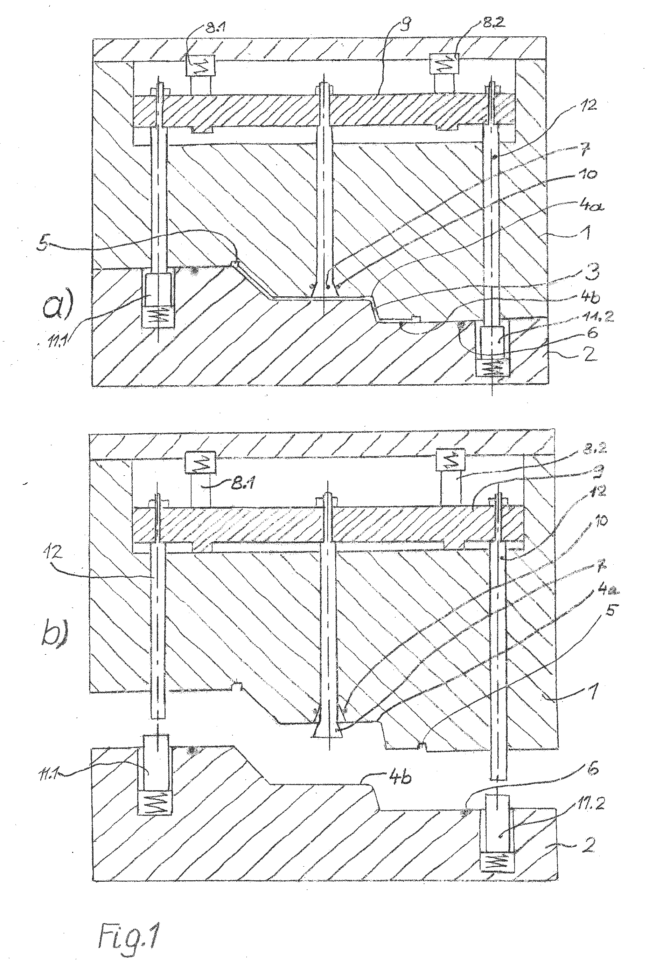

- **Fig. 1a, b**: eine geschnittene Ansicht eines erfindungsgemäßen Formwerkzeugs mit einem allseitig von der Formfläche umschlossenen Auswerfer in der Werkzeugschließlage (a) mit zurückgefahrenem Auswerfer und in einer teilweise geöffneten Werkzeugposition mit dem Auswerfer in der Ausfahrposition (b); und

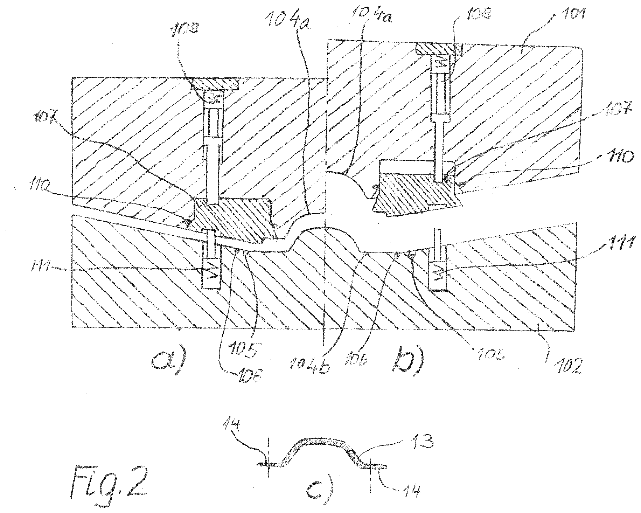

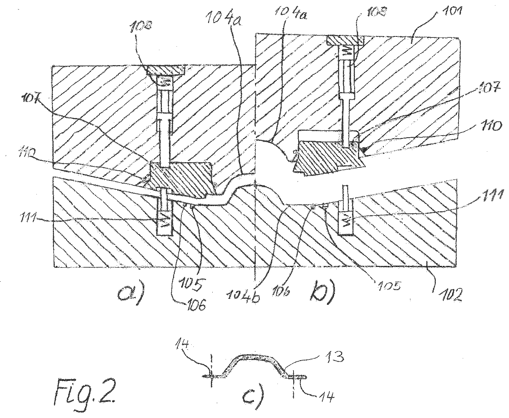

- **Fig. 2a, b**: ein zweites Ausführungsbeispiel der Erfindung mit einem randseitig im Formflächenbereich angeordneten Auswerfer zum einen in der Einfahrposition während des letzten Teils des Werkzeugschließhubs (a) und zum anderen in der Ausfahrposition bei weiter geöffnetem Formwerkzeug (b).

Das in Fig. 1 gezeigte Formwerkzeug dient zur Herstellung eines Faserverbundbauteils im Wege des Harzinjektionsverfahrens und besteht aus einem oberen und einem unteren Werkzeugteil 1, 2, welche relativ zueinander hubbeweglich angetrieben und mit einander zugekehrten, in der Werkzeugschließlage (Fig. 1a) eine Formkavität 3 begrenzenden Formflächen 4a und 4b versehen sind. Die Werkzeugteile 1, 2 enthalten in üblicher Weise an die Formkavität 3 angrenzende Harzkanäle 5 zur Aufnahme eines bei der Vakuuminjektion entstehenden Harzüberschusses sowie Dichtelemente 6, durch die die Formkavität 3 in der Werkzeugschließlage vakuumdicht verschlossen wird.

Bei dem gezeigten Ausführungsbeispiel ist das obere Werkzeugteil 1 mit einem Auswerfer 7 bestückt, welcher durch eine vorzugsweise aus mehreren Gasdruckfedern 8.1, 8.2 bestehende Auswerferfeder 8 unter Zwischenschaltung einer Verbindungsbrücke 9 kontinuierlich in Ausfahrrichtung beaufschlagt und beim Schließen des Werkzeugs entgegen der Kraft der Auswerferfeder 8 in die Einfahrposition (Fig. 1a) zurückgefahren wird, in der der Auswerfer 7 mit seiner Stirnfläche flächenkonform zur werkzeugseitigen Formfläche 4a ausgerichtet und über Dichtelemente 10 zur Formkavität 3 hin abgedichtet ist.

Wird das Werkzeug im Anschluss an die Konsolidierungsphase des Bauteils geöffnet, so gelangt der Auswerfer 7 unter der Vorspannung der Auswerferfeder 8 in die Ausfahrposition (Fig. 1b), wobei die Ausfahrlänge und die Federkraft so groß bemessen sind, dass ein an der Formfläche 4a anhaftendes Faserverbundbauteil sicher entformt wird.

Die Umsteuerung des Auswerfers 7 in die Einfahrposition hingegen erfolgt durch eine am unteren Werkzeugteil 2 wiederum in Form einzelner Gasdruckfedern 11.1 und 11.2 angeordnete Rückstellfeder 11, welche in Abhängigkeit von der Hubposition der Werkzeugteile 1, 2 über am oberen Werkzeugteil 1 verschieblich geführte, an der Verbindungsbrücke 9 befestigte Schubstangen 12.1 und 12.2 auf den Auswerfer 7 einwirkt und deren Federspannung stärker als die der Auswerferfeder 8 bemessen ist. Wird das Werkzeug geschlossen, so sind die Schubstangen 12 zunächst noch von der Rückstellfeder 11 getrennt und der Auswerfer 7 befindet sich unter der Wirkung der Auswerferfeder 8 in der Ausfahrposition (Fig. 1b). Bevor jedoch die Werkzeugteile 1, 2 den letzten Teil des Schließhubs erreichen, geraten die Schubstangen 12 in Anlage an die Rückstellfeder 11 und der Auswerfer 7 wird entgegen der Auswerferfeder 8 in die Einfahrposition umgesteuert und verbleibt in dieser Position während des letzten Teils des Schließhubs unter zunehmender Kompression der Rückstellfeder 11 bis zur vollständigen Werkzeugschließlage. Der Anschlagpunkt der Schubstangen 12 an der Rückstellfeder 11 ist so gewählt, dass das in die Formkavität 3 eingelegte Fasermaterial gerade noch nicht von dem Auswerfer 7 kontaktiert wird. Beim Öffnen des Werkzeugs arbeitet die Auswerfersteuerung in umgekehrter Richtung, so dass der Auswerfer 7 erneut in die Ausfahrposition gelangt, wenn sich die Anschlagverbindung zwischen Rückstellfeder 11 und Schubstangen 12 löst.

Die beschriebene Auswerfersteuerung lässt sich ist auch für Formwerkzeuge verwenden, deren Formkavität 3 in der Schließlage mit einer Formmasse befüllt wird. In diesem Fall muss der Auswerfer in der endgültigen Werkzeugschließlage in die Einfahrposition zurückgefahren sein, damit er die Formkavität beim Befüllen nicht blockiert und dadurch eine formgenaue Bauteilherstellung verhindert.

In Fig. 2, wo die dem oben beschriebenen Formwerkzeug entsprechenden Komponenten durch ein um 100 erhöhtes Bezugszeichen gekennzeichnet sind, ist ein weiteres Ausführungsbeispiel der Erfindung mit einem Auswerfer 107 im linken Teil in der Einfahrposition (Fig. 2a) und im rechten Teil in der ausgefahrenen Auswerferposition (Fig. 2b) sowie in Fig. 2c ein mit dem Formwerkzeug hergestelltes Faserverbundbauteil 13 dargestellt. Bei diesem Ausführungsbeispiel bildet der Auswerfer 107 in der Einfahrposition die randseitige Verlängerung der Formfläche 104a im Abfallbereich 14 des Faserverbundbauteils 13 und wird wiederum durch die der Auswerferfeder 108 entgegenwirkende Rückstellfeder 111 in die Einfahrposition verfahren, bevor das Werkzeug den letzten Teil des Schließhubs durchläuft, so dass der Auswerfer 107 gleichzeitig mit der Formfläche 104a auf das eingelegte Fasermaterial auftrifft. Anderenfalls würden am Auswerfer 107 aufgrund einer vorzeitigen örtlichen Faserkompression Faserdesorientierungen im Fasermaterial entstehen und der Abfallbereich 14 des Bauteils 13 müsste so breit bemessen werden, dass sich solche Desorientierungen nicht über den Abfallbereich hinaus in das eigentliche, nach dem Zuschnitt verbleibende Bauteil 13 erstrecken könnten. Bei dem gezeigten Formwerkzeug hingegen kann der Abfallbereich 14 sehr viel schmaler bemessen und dadurch wertvolles Fasermaterial eingespart und dennoch das fertig beschnittene Bauteil 13 von derartigen Faserdesorientierungen frei gehalten werden.

Ferner liegt der Auswerfer 107 bei diesem Ausführungsbeispiel im Bereich der Abdichtung 106 der Formkavität. Dabei zeigt sich ein weiterer Vorteil der beschriebenen Auswerfersteuerung, weil durch diese nicht nur eine Faserfehlorientierung im Abfallbereich 14, sondern zugleich auch eine vorzeitige, örtliche Quetschung der Dichtung 106 am Auswerfer 107 und eine daraus resultierende Fehlabdichtung der Formkavität verhindert wird.

Im Übrigen ist die Funktionsweise des in Fig. 2 gezeigten Formwerkzeugs die gleiche wie die des ersten Ausführungsbeispiels.

## Patentansprüche

1. Formwerkzeug insbesondere für Faserverbundbauteile, mit relativ zueinander hubbeweglich betätigten, mit einander zugekehrten Formflächen (4; 104) zur Begrenzung der Formkavität (3) in der Werkzeugschließlage versehenen, ersten und zweiten Werkzeugteilen (1, 2; 101, 102), von denen zumindest das erste Werkzeugteil (1, 101) mindestens einen Auswerfer (7; 107) enthält, welcher von einer mit der Formfläche (4a; 104a) des Werkzeugteils flächenkonformen Einfahrposition in der Werkzeugschließlage unter der Federkraft einer zwischen erstem Werkzeugteil und Auswerfer wirksamen Auswerferfeder (8; 108) beim Öffnen der Werkzeugteile in eine über die Formfläche vorstehende Ausfahrposition verstellbar ist, **dadurch gekennzeichnet, dass** das Formwerkzeug so gestaltet ist, dass der Auswerfer (7; 107) durch eine zwischen diesem und dem zweiten Werkzeugteil (2; 102) im letzten Teil des Werkzeugschließhubs wirksame Rückstellfeder (11; 111) mit einer die Federkraft der Auswerferfeder (8; 108) übersteigenden Gegenkraft beaufschlagt und dadurch **vor Erreichen der Werkzeugschließlage** selbsttätig in die Einfahrposition verstellt, im übrigen Teil des Werkzeughubs aber von der Gegenkraft der Rückstellfeder entlastet ist.

2. Formwerkzeug nach Anspruch 1, **dadurch gekennzeichnet dass** der Auswerfer (7; 107) gegenüber dem Werkzeugteil (1; 101) abgedichtet ist.

3. Formwerkzeug nach Anspruch 1 oder 2, **dadurch gekennzeichnet dass** der Auswerfer (7) innerhalb der Formfläche (4a) angeordnet ist.

4. Formwerkzeug nach Anspruch 1 oder 2, **dadurch gekennzeichnet dass** der Auswerfer (107) randseitig im Abfallbereich der Formfläche (104a) angeordnet ist.

5. Formwerkzeug nach einem der vorhergehenden Ansprüche, **dadurch gekennzeichnet dass**
die Rückstellfeder (11; 111) einerseits fest mit dem zweiten Werkzeugteil (2; 102) verbunden ist und andrerseits auf Seiten des Auswerfers (7; 107) eine im letzten Teil des Werkzeugschließhubs wirksame, im Übrigen getrennte Anschlagverbindung aufweist.

6. Formwerkzeug nach einem der vorhergehenden Ansprüche, **dadurch gekennzeichnet dass**
als Auswerfer- und/oder Rückstellfeder (7, 11; 107, 111) eine Gasfeder vorgesehen ist.

## Claims

1. A mould, especially for fibre composite components, with first and second mould parts (1, 2; 101, 102) which are actuated in a stroke movement relative to each other and are provided with moulding surfaces (4; 104) which face each other for defining the moulding cavity (3) in the mould closure position, of which at least the first mould part (1, 101) contains at least one ejector (7; 107) which is adjustable from a retracted position which conforms to the surface of the moulding surface (4a; 104a) of the mould part in the mould closure position under the spring force of an ejector spring (8; 108), which is effective between the first mould part and ejector when the mould parts are opened, into an extended position which projects above the moulding surface, **characterised in that** the mould is configured such that the ejector (7; 107) is acted upon with an opposing force which exceeds the spring force of the ejector spring (8; 108) by a restoring spring (11; 111) which is effective between it and the second mould part (2; 102) in the last part of the mould closure stroke and thereby prior to reaching the mould closure position automatically adjusts it into the retracted position, but in the remaining part of the mould stroke is relieved of the opposing force of the restoring spring.

2. A mould according to Claim 1, **characterised in that**
the ejector (7; 107) is sealed off from the mould part (1; 101).

3. A mould according to Claim 1 or Claim 2, **characterised in that**
the ejector (7) is arranged within the moulding surface (4a).

4. A mould according to Claim 1 or Claim 2, **characterised in that**
the ejector (107) is arranged at the edge in the waste region of the moulding surface (104a).

5. A mould according to one of the preceding claims, **characterised in that** the restoring spring (11; 111) is connected on one hand securely to the second mould part (2; 102) and on the other hand on sides of the ejector (7; 107) has a stop connection which is effective in the last part of the mould closure stroke and otherwise is separate.

6. A mould according to one of the preceding claims, **characterised in that** a gas spring is provided as ejector spring and/or restoring spring (7, 11; 107, 111).

## Revendications

1. Outil de mise en forme, en particulier de pièces composites renforcées par des fibres comportant une première partie d'outil et une seconde partie d'outil (1, 2 ; 101, 102) mobiles l'une par rapport à l'autre équipées de surfaces de mise en forme (4 ; 104) tournées l'une vers l'autre pour permettre de délimiter une cavité de mise en forme (3) lorsque l'outil est en position fermée, et dont au moins la première partie d'outil (1, 101) renferme au moins un éjecteur (7 ; 107) qui peut être déplacé lors de l'ouverture des parties d'outil, à partir d'une position repliée dans laquelle sa surface est en conformité avec la surface de mise en forme (4a ; 104a) de la partie d'outil, lorsque cet outil est fermé, sous l'action de la force de rappel d'un ressort d'éjection (8 ; 108) actif entre la première partie d'outil et l'éjecteur vers une position déployée dans laquelle il dépasse de la surface de mise en forme,
**caractérisé en ce que**
l'outil de mise en forme est réalisé de sorte que l'éjecteur (7 ; 107) soit sollicité, par un ressort de rappel (11 ; 111) actif entre celui-ci et la seconde partie d'outil (2 ; 102) dans la dernière partie de la course de fermeture de l'outil et ayant une force antagoniste dépassant la force de rappel du ressort d'éjection (8 ; 108), et, soit ainsi automatiquement déplacé dans la position repliée avant que l'outil ait atteint sa position de fermeture, mais, soit toutefois déchargé de la force antagoniste du ressort de rappel dans toutes les autres parties de la course de l'outil.

2. Outil de mise en forme conforme à la revendication 1,
**caractérisé en ce que**
l'éjecteur (7 ; 107) est rendu étanche par rapport à la partie d'outil (1 ; 101).

3. Outil de mise en forme conforme à la revendication 1 ou 2,
**caractérisé en ce que**
l'éjecteur (7) est monté à la partie interne de la surface de mise en forme (4a).

4. Outil de mise en forme conforme à la revendication 1 ou 2,
**caractérisé en ce que**
l'éjecteur (107) est situé au bord de la zone de chute de la surface de mise en forme (104a).

5. Outil de mise en forme conforme à 'une des revendications précédentes,
**caractérisé en ce que**
le ressort de rappel (11 ; 111) est, d'une part, relié solidairement à la seconde partie d'outil (2 ; 102) et d'autre part comporte sur les côtés de l'éjecteur (7 ; 107), une liaison de butée active dans la dernière partie de la course de fermeture de l'outil, mais pour le reste séparée.

6. Outil de mise en forme conforme à l'une des revendications précédentes,
**caractérisé en ce qu'**
en tant que ressort d'éjection et/ou de ressort de rappel (7, 11 ; 107, 111), il est prévu un ressort pneumatique.
